# EUROPÄISCHE PATENTSCHRIFT

(11) **EP 3 084 068 B1**
(45) Veröffentlichungstag und Bekanntmachung des Hinweises auf die Patenterteilung: **17.10.2018**
(21) Anmeldenummer: 14815646.6
(22) Anmeldetag: 12.12.2014
(51) Int. Cl.: D06N 7/00, D21H 27/20, H05B 33/22, B32B 5/02, B32B 29/00

(54) **TAPETE MIT ELEKTROLUMINESZENTEN ELEMENTEN**
WALLPAPER WITH ELECTROLUMINESCENT ELEMENTS
PAPIER PEINT POURVU D'ÉLÉMENTS ÉLECTROLUMINESCENTS

(30) Priorität: 19.12.2013 DE 202013011255 U
(43) Veröffentlichungstag der Anmeldung: 26.10.2016
(73) Patentinhaber: A.S. Création Tapeten AG, 51645 Gummersbach (DE)
(72) Erfinder: FISCHER, Maxim, 51643 Gummersbach (DE); FISCHER, Ulli, 51597 Morsbach (DE)
(74) Vertreter: dompatent von Kreisler Selting Werner - Partnerschaft von Patent- und Rechtsanwälten mbB
(86) Internationale Anmeldenummer: PCT/EP2014/077599
(87) Internationale Veröffentlichungsnummer: WO 2015/091278

(56) Entgegenhaltungen:
- CN-A- 101 646 277
- DE-A1-102009 026 409
- KR-A- 20080 106 829
- DATABASE WPI Week 200742 Thomson Scientific, London, GB; AN 2007-437748 XP002736954, -& KR 2006 0086565 A (LG CHEM LTD) 1. August 2006 (2006-08-01)
- DATABASE WPI Week 200706 Thomson Scientific, London, GB; AN 2007-051486 XP002736955, -& KR 2006 0021989 A (KANG C) 9. März 2006 (2006-03-09)

## Beschreibung

Die vorliegende Erfindung betrifft eine elektrolumineszente Tapete. Elektrolumineszenz ist eine Form der Lumineszenz, bei der ein Festkörper durch Anlegen eines elektrischen Feldes bzw. einer elektrischen Spannung dazu angeregt wird, elektromagnetische Strahlung, beispielsweise in Form von Licht, zu emittieren. Lumineszenz beschreibt einen Vorgang, bei welchem ein Atom Energie absorbiert hat und bei Abgabe der Energie, also bei einem Übergang von einem angeregten Zustand zum Grundzustand, Licht ausstrahlt. Man spricht hier auch von einer strahlenden Desaktivierung eines physikalischen Systems.
Elektrolumineszenz hat beispielsweise Einzug in Folien gefunden. Entsprechende Elektrolumineszenz-Folien werden auch als Leuchtfolien oder Lichtfolie bezeichnet. Bei einer Elektrolumineszenz-Folie ist das elektrolumineszente Material elektrisch isoliert zwischen zwei leitenden Schichten angeordnet. Diese leitenden Schichten bilden die Elektrode. Dabei ist die Frontelektrode, welche zu einem Betrachter hin angeordnet ist, lichtdurchlässig und enthält üblicherweise Indiumzinnoxid (ITO). Die Rückseitenelektrode, welche sich auf der einem Betrachter abgewandten Seite befindet, reflektiert das Licht. Häufig wird eine Metallfolie eingesetzt. Auf der Rückseite der Elektrode kann weiterhin eine Kunststoffschutzfolie angebracht sein. Die Gesamtdicke einer entsprechenden Elektrolumineszenz-Folie liegt üblicherweise bei weniger als 1 mm.

Im Stand der Technik bekannte dielektrische Materialien umfassen Bariumtitanat. Ein handelsübliches Produkt ist beispielweise LuxPrint® 8153, welches von der Firma DuPont, Neu-Isenburg (Deutschland), vertrieben wird. Hierbei handelt es sich um eine lösungsmittelhaltige Paste. Bei der Verarbeitung, also beim Aufbringen dieses Materials auf das Substrat, entweichen Dämpfe, welche abgesaugt werden müssen. Das Absaugen von Dämpfen erfolgt in jedem Arbeitsschritt. Werden handelsübliche dielektrische Materialien verarbeitet, so kann durch die Vermischung der bei der Verarbeitung entstehenden unterschiedlichen Dämpfe ein explosives Gemisch entstehen. Zudem sind diese Pasten sehr teuer. Besonders nachteilig ist weiterhin, dass sich im Tapetendruck üblicherweise eingesetzte Siebdruckschablonen mit üblichen Reinigungsmitteln nach dem Aufbringen der dielektrischen Schicht aus einer kommerziellen Paste nicht wieder reinigen lassen, so dass sich auch deswegen ein hoher Kosten- und Materialaufwand ergibt.

Im Stand der Technik, wie beispielsweise in DE 10 2009 026 409 A1, sind elektrolumineszierende Textilien beschrieben. Diese werden beispielsweise durch Integration elektrisch leitfähiger Filamente oder Garne hergestellt, wie dies beispielsweise in DE 10 2004 007 365 A1 beschrieben ist.

Die Aufgabe der vorliegenden Erfindung besteht nun darin, Elektrolumineszenz als Dekorationselement für Tapeten verfügbar zu machen. Dabei sollen die Tapeten flexibel sein, um ein leichtes Anbringen an Wänden und/oder Decken zu ermöglichen, ohne dass durch das Anbringen die elektrolumineszente Wirkung verloren geht. Ebenso muss sichergestellt sein, dass auch beim Transport und/oder der Lagerung der Tapete keine Beschädigungen an der elektrolumineszenten Schicht auftreten, wodurch bei der endgültigen Verwendung ein elektrolumineszenter Effekt nicht mehr oder nicht mehr homogen auftreten würde. Zudem soll ein Verfahren bereitgestellt werden, das eine kostengünstige Produktion der Tapeten ermöglicht, wobei eine Gefährdung durch entstehende Dämpfe vermieden werden soll.
In einer ersten Ausführungsform wird die der vorliegenden Erfindung zugrundeliegende Aufgabe gelöst durch eine elektrolumineszente Tapete, welche:
- ein Substrat mit einer ersten Schutzschicht,
- eine elektrolumineszente Schicht, welche die erste Schutzschicht wenigstens teilweise bedeckt, und
- eine Musterschicht, welche die elektrolumineszente Schicht wenigstens teilweise bedeckt, umfasst,
wobei
die elektrolumineszente Schicht eine Rückseitenelektrode, eine dielektrische Schicht, eine Leuchtschicht und eine transparente Frontelektrode umfasst,
die Rückseitenelektrode die erste Schutzschicht wenigstens teilweise bedeckt und eine zweite Schutzschicht die transparente Frontelektrode vollständig bedeckt, und
die dielektrische Schicht Titandioxid, Netzmittel, Paraffin und ein Bindemittel umfasst,
wobei das Bindemittel vorzugsweise ein Emulsions-PVC und ein Extender-PVC enthält.

Die Zusammensetzung umfasst wenigstens ein Paraffin. Durch dieses können die physikalischen Eigenschaften der aufzutragenden dielektrischen Schicht, wie beispielsweise die Viskosität, eingestellt werden. Paraffine im Sinne der vorliegenden Erfindung sind Wachse oder Fette mit einem Siedepunkt von 100 °C oder mehr, vorzugsweise mit einem Siedepunkt von 120 °C oder mehr. Besonders bevorzugt sind Isoparaffine mit einem Siedepunkt von 150 °C oder mehr.

Isoparaffine und Paraffine im Allgemeinen sind in der Tapetenherstellung üblicherweise eingesetzte Materialien. Bei der Herstellung der Tapete entstehen daher in jedem Schritt erfindungsgemäß nur solche Dämpfe, die mit den Dämpfen aus den anderen Produktionsschritten kein explosives Gemisch bilden können. Zudem können beim Aufbringen der Zusammensetzung verwendete Siebdruckschablonen im Anschluss mit dem verwendeten Paraffin wieder gereinigt werden.

Durch das Netzmittel wird die Grenzflächenspannung zwischen einer festen Oberfläche und einer Flüssigkeit herabgesetzt. Das Netzmittel dient der Dispersion der Titandioxid-Teilchen im Bindemittel. Als Netzmittel können beispielsweise organische Ester-Verbindungen eingesetzt werden. Geeignete Netzmittel sind beispielsweise DISPERPLAST®-1148 der Firma BYK Additives & Instruments, BYK-Chemie GmbH, Wesel (Deutschland) oder Phosphatester, wie sie von der Firma Elementis Specialties, AE Delden (Niederlande), unter dem Handelsnamen SERVOXYL® 9/100 vertrieben werden.

Überraschenderweise hat sich gezeigt, dass eine solche Zusammensetzung der dielektrischen Schicht eine elektolumineszente Wirkung der Tapete in den Bereichen, in denen die Schicht aufgebracht wird, ermöglicht. Die erfindungsgemäße dielektrische Schicht kann zudem einfach aufgebracht werden. In der Herstellung entstehen keine Dämpfe, welche mit anderen bei der Herstellung der Tapete anfallenden Dämpfen zu einem explosiven Gemisch führen würden. Zudem ist die erfindungsgemäße dielektrische Schicht kostengünstig herzustellen. Siebdruckschablonen, welche zum Aufbringen der dielektrischen Schicht benötigt werden, können mit üblichen Reinigungsmitteln, wie beispielsweise Verdünner DuPont®-8210 der Firma DuPont oder Isoparaffin gereinigt werden.

Die dielektrische Schicht umfasst ein dielektrisches Material, also ein Dielektrikum. Als Dielektrikum werden elektrisch schwach- oder nichtleitende, nichtmetallische Substanzen bezeichnet. Die Ladungsträger der Substanzen sind im Allgemeinen nicht frei beweglich.

Die dielektrische Schicht umfasst Titandioxid in einem Anteil von 40 bis 80 Gew.-%, insbesondere von 45 bis 65 Gew.-% bezogen auf 100 Gew.-% des gesamten dielektrischen Materials. Das Titandioxid liegt in Form von Teilchen, insbesondere mit einer Teilchengröße von 100 nm bis 300 nm, bestimmt mittels eines Elektronenmikroskops. Geeignetes Titandioxid wird beispielsweise von der Firma Tronox, Stamford (USA) unter der Bezeichnung CR-828/CR-880 oder der Firma Sachtleben, Duisburg (Deutschland) unter der Bezeichnung R-660 vertrieben.

Der Anteil an Netzmittel liegt vorzugsweise im Bereich von 0,1 bis 10 Gew.-%, insbesondere in einem Bereich von 0,5 bis 5 Gew.-%, bezogen auf 100 Gew.-% des gesamten dielektrischen Materials. Das dielektrische Material kann weitere, aus dem Stand der Technik bekannte Additive umfassen. Hierbei kann es sich beispielsweise um einen Weichmacher, einen Stabilisator oder einen Stabilisator mit einem Treibmittel kickender Wirkung handeln.

Weiterhin umfasst das dielektrische Material ein Bindemittel insbesondere in einem Anteil von 15 bis 45 Gew.-%, insbesondere von 20 bis 35 Gew.-% bezogen auf 100 Gew.-% des gesamten dielektrischen Materials. Das Bindemittel verklebt die Titandioxidkörnchen. Es umfasst vorzugsweise ein Emulsions-PVC (PVC = Polyvinylchlorid), aber auch wasserbasierte Polymere, welche in einem Anteil von 12 bis 27 Gew.-%, insbesondere in einem Anteil von 15 bis 25 Gew.-%, jeweils bezogen auf das Gesamtgewicht der dielektrischen Schicht, vorhanden sind. Emulsions-PVC sind dem Fachmann aus dem Stand der Technik zur Herstellung von PVC-Plastisolen bekannt. Weiterhin enthält das Bindemittel vorzugsweise ein Extender-PVC, das die Rheologie und die Viskosität des Bindemittels und damit der Zusammensetzung beeinflusst. Der Anteil an Extender-PVC bezogen auf das Gesamtgewicht der dielektrischen Schicht liegt insbesondere bei 2 bis 10 Gew.-%, insbesondere bei 4 bis 8 Gew.-%.

Emulsions-PVC und Extender-PVC enthalten stets eine gewisse Emulgatormenge (ca. 1 bis 2 Gew.%, z.B. Metallseifen oder Sulfonate), die sich auf die Stabilisierbarkeit und Transparenz auswirkt, aber auch in der Regel eine leichtere Verarbeitbarkeit gewährleistet. Der im PVC-Korn sehr gleichmäßig verteilte Emulgator wirkt als Gleitmittel und erleichtert den Schmelzfluß. Der hydrophile Charakter des Emulgators begünstigt die Feuchtigkeitsaufnahme, sowohl am Rohpulver als auch am Fertigteil. Letztere ist in vielen Fällen nachteilig, kann sich aber auch positiv auswirken zur Beseitigung unerwünschter elektrostatischer Aufladung, zum Beispiel bei Fußbodenbelägen. Von Vorteil kann auch bei alkalisch eingestellten E-Typen die Möglichkeit einer preisgünstigen und physiologisch einwandfreien Stabilisierung sein. Da die in den handelsüblichen E-Typen vorhandenen Emulgatoranteile nach Art und Menge recht unterschiedlich sind, ist auch die Mannigfaltigkeit der dadurch bedingten Eigenschaftsänderungen sehr groß. Hierin liegt ein wesentlicher Unterschied zwischen E-PVC auf der einen und S- und M-PVC auf der anderen Seite. E-Typen werden durch Sprüh- oder Walzentrocknung aufgearbeitet, in geringem Umfang auch noch durch Fällen und nachträgliches Auswaschen. Die Korn- und Schüttguteigenschaften weichen daher von denen der S- und M-Typen ab, was bei der Mischungsherstellung und Compoundierung zu berücksichtigen ist.

Weiterhin kann man in Pasten-Rezepturen bis maximal 50 Gew.% des Pasten-PVC-Anteils durch ein "Extender-PVC" ersetzen, vornehmlich zur Erniedrigung der Pastenviskosität. Es sind dies feinkörnig/kompakte S- und M-PVC-Typen mit hoher Schüttdichte (ca. 0,60 bis 0,70 g/ml), geringer Weichmacheraufnahme (ca. 6 bis 8g DOP/100g PVC nach DIN 53417 Teil 1) und nach Möglichkeit ohne Kornanteile über 75 bis 100µm. "(Becker/Braun: "Kunststoff Handbuch - Polyvinylchlorid 2/1. 2.Auflage. Carl Hanser Verlag München Wien. 1986). Eine positive Nebenwirklung bringt auch die geringere Porosität mit sich.

In einer besonders bevorzugten Ausführungsform umfasst die dielektrische Schicht:
45 bis 65 Gew.-% Titandioxid,
0,5 bis 5 Gew.-% Netzmittel,
20 bis 35 Gew.-% Bindemittel,
0,1 bis 5 Gew.-% Paraffin,
0,1 bis 5 Gew.-% Weichmacher und
0,1 bis 3 Gew.-% Stabilisator,
wobei das gesamte dielektrische Material 100 Gew.-% entspricht.

Bevorzugt liegt das Titanoxid in der Rutil-Struktur (Rutil-Titan) vor.
In einer besonders bevorzugten Ausführungsform umfasst die dielektrische Schicht
45 bis 55 Gew.-% Rutil-Titandioxid,
15 bis 25 Gew.-% Emulsions-PVC,
15 bis 25 Gew.-% Weichmacher,
4 bis 8 Gew.-% Extender-PVC,
0,5 bis 3 Gew.-% Netzmittel,
0,5 bis 1 Gew.-% Isoparaffin und
0,3 bis 1 Gew.-% Stabilisator mit Treibmittel,
wobei das gesamte dielektrische Material 100 Gew.-% entspricht.

Bevorzugte Isoparaffine weisen einen Siedepunkt bei einer Temperatur von 180 °C oder mehr auf. Geeignete Isoparaffine sind beispielsweise Isoparaffin M der Firma Julius Hoesch GmbH & Co. KG, Düren (Deutschland) oder Hisop®13 R der Firma Overlack GmbH, Düsseldorf (Deutschland).

Weiterhin kann die Tapete elektrische Anschlüsse für die Rückseiten- und Frontelektrode aufweisen. Diese sind vorzugsweise an einer Seite der Tapete angeordnet. Insbesondere sind diese an der Seite der Tapete angeordnet, die nach dem Anbringen der Tapete an einer Wand die Unterseite bildet. In diesem Fall können die elektrischen Anschlüsse dann in einer Fußleiste verdeckt werden.
Die erfindungsgemäße Tapete ist derart aufgebaut, dass nach Anlegen einer Wechselspannung das elektrolumineszente Material zum Leuchten anregbar ist. Hierdurch entsteht eine selbstleuchtende Tapete. Andere, externe Lichtquellen sind nicht notwendig.
Bei dem Substrat handelt es sich um übliche Substrate für Tapeten. Hierbei kann es sich beispielsweise um Vlies oder Papier handeln. Das Vlies kann ein Flächengewicht von 85 g/m² aufweisen. Das Substrat weist dabei für eine Tapete übliche Größe auf. Es kann sich hierbei daher um eine Bahn handeln, welche eine Breite von bis zu 1,06 m und eine Länge von bis zu 3 m aufweist. Das Substrat kann jedoch auch eine hiervon verschiedene Größe aufweisen. So ist es möglich durch kleinere Substrate, beispielsweise mit einer Breite von 0,75 m und einer Länge von 1 m bis 2 m einzelne Bereiche an einer Wand hervorzuheben. Die Größe des Substrats ist somit abhängig von der späteren Verwendung und kann vom Fachmann im Rahmen seines Fachwissens bestimmt werden. Die erfindungsgemäße Tapete kann beispielsweise auch in Forme einer Bordüre an einer Wand angebracht werden.

In einer bevorzugten Ausführungsform befindet die erste Schutzschicht sich direkt auf dem Substrat und bedeckt dieses vollständig. Auf der ersten Schutzschicht befindet sich dann die elektrolumineszente Schicht, welche die erste Schutzschicht wenigstens teilweise bedeckt. Die zweite Schutzschicht ist transparent und bedeckt

die elektrolumineszente Schicht vollständig und die erste Schutzschicht insoweit diese nicht von der elektrolumineszenten Schicht bedeckt wird.

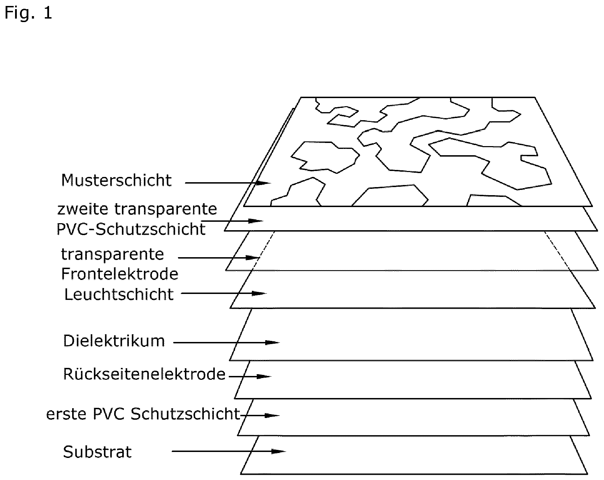

In dieser Ausführungsform liegt die elektrolumineszente Schicht zwischen der ersten und der zweiten Schutzschicht. Die beiden Schutzschichten kapseln die elektrolumineszente Schicht ein. Hierdurch wird diese Schicht vor äußeren Einflüssen geschützt, wodurch eine längere Lebensdauer und Haltbarkeit der erfindungsgemäßen Tapete gegeben ist. Fig. 1 zeigt schematisch den Aufbau einer solchen Tapete.

Insbesondere umfasst die erste Schutzschicht PVC (Polyvinylchlorid). Durch eine solche transparente Schutzschicht wird ein Aufbringen der elektrolumineszenten Schicht erleichtert. Insbesondere wird die Haftung der elektrolumineszenten Schicht auf dem Substrat verbessert.

Die zweite transparente Schutzschicht bedeckt erfindungsgemäß die elektrolumineszente Schicht vollständig. Bedeckt die elektrolumineszente Schicht die erste Schutzschicht nur teilweise, so wird die erste Schutzschicht in den übrigen Bereichen von der zweiten transparenten Schutzschicht bedeckt. Wird die erste Schutzschicht vollständig von der elektrolumineszenten Schicht bedeckt, so bedeckt die zweite transparente Schutzschicht ausschließlich vollständig die elektrolumineszente Schicht. Die zweite Schutzschicht ist transparent und umfasst vorzugsweise PVC. Die zweite Schutzschicht verhindert, dass in der elektrolumineszenten Schicht Risse oder andere Beschädigungen während Transport oder Lagerung auftreten, und schützt die elektrolumineszente Schicht auch wenn die Tapete gemäß ihrer eigentlichen Bestimmung an Wand und/oder Decke angebracht ist vor Beschädigungen. Eine PVC Schutzschicht ist bevorzugt, da diese kostengünstig zu erhalten, transparent und einfach zu verarbeiten ist. Die erste und/oder zweite Schutzschicht kann ein PVC-Copolymer- und/oder ein PVC-Homopolymer-Plastisol enthalten, insbesondere bestehen sie daraus.

Die elektrolumineszente Schicht befindet sich entweder auf dem Substrat oder, soweit vorhanden, auf der ersten Schutzschicht. Die elektrolumineszente Schicht kann jede beliebige Form aufweisen, solange sichergestellt ist, dass eine elektrische Spannung angelegt werden kann, wodurch Elektrolumineszenz möglich ist. So können annähernd beliebige Muster oder Formen dargestellt werden.

Die elektrolumineszente Schicht umfasst eine Rückseitenelektrode, eine dielektrische Schicht, eine Leuchtschicht und eine transparente Frontelektrode. Diese sind innerhalb der Tapete so angeordnet, dass die Rückseitenelektrode sich auf der ersten Schutzschicht befindet und diese wenigstens teilweise bedeckt. Zwischen Rückseitenelektrode und Frontelektrode sind die dielektrische Schicht und die Leuchtschicht in dieser Reihenfolge angeordnet. Dabei ist die Größe der dielektrischen Schicht und/oder der Leuchtschicht so gewählt, dass ein Kurzschluss zwischen Rückseitenelektrode und Frontelektrode vermieden wird, die Frontelektrode also keinen direkten Kontakt mit der Rückseitenelektrode aufweist. Gleichzeitig muss sichergestellt werden, dass eine ausreichende Spannung angelegt werden kann. Vorzugsweise überdeckt daher die dielektrische Schicht die Rückseitenelektrode um wenigstens 5 mm, insbesondere um wenigstens 10 mm an jeder Seite. Die dielektrische Schicht umschließt die Rückseitenelektrode vollständig. Die Leuchtschicht ist vorzugsweise ebenfalls größer als die dielektrische Schicht und überdeckt diese vorzugsweise um wenigstens 5 mm, insbesondere um wenigstens 10 mm an jeder Seite. Die Frontelektrode ist erneut üblicherweise größer als die Leuchtschicht und überdeckt diese vorzugsweise ebenfalls um wenigstens 5 mm, insbesondere um wenigstens 10 mm an jeder Seite.

Die elektrolumineszente Schicht umfasst eine Rückseitenelektrode, eine dielektrische Schicht, eine Leuchtschicht und eine transparente Frontelektrode, in dieser Reihenfolge. Die Rückseitenelektrode umfasst ein leitfähiges Material, welches beispielsweise auf Kohlenstoff basiert. Insbesondere basiert das leitfähige Material vorzugsweise auf Kohlenstoff-Nanoröhrchen. Beispielsweise handelt es sich bei der Rückseitenelektrode um eine Dispersion von Kohlenstoff-Nanoröhrchen, welche von der Firma BYK-Chemie GmbH, Wesel (Deutschland), unter dem Handelsnamen CARBOBYK®-9810 vertrieben wird.

In einer alternativen Ausführungsform umfasst das leitfähige Material ein metallisches Teilchen aus einem Kern und einer Hülle, wobei das Metall der Hülle edler ist als das Metall des Kerns. Vorzugsweise handelt es sich bei der dem Metall der Hülle um Silber, so dass das leitfähige Material ein metallisches Teilchen mit einer Hülle aus Silber umfasst. Besonders bevorzugt handelt es sich bei dem metallischen Teilchen um ein mit Silber beschichtetes Kupferteilchen, welches als Pulver vorliegt und wie es beispielsweise von der Firma GGP Metalpowder AG, Fürth (Deutschland) unter der Bezeichnung Kontaktargan vertrieben wird. Überraschenderweise hat sich gezeigt, dass ein eine solche Rückseitenelektrode zu einem stabileren Erscheinungsbild und einem intensiveren Leuchten der elektrolumineszenten Schicht führt.

Die Leuchtschicht der Tapete umfasst in einer bevorzugten Ausführungsform Zinksulfid, insbesondere mit einem Metall-dotierten Zinksulfid, besonders bevorzugt mit Kupfer-dotiertem Zinksulfid. Dabei kann das Material der Leuchtschicht, das Leuchtmittel, in Form einer Paste oder eines Pulvers, insbesondere in Form eines Pulvers vorliegen. Liegt das Leuchtmittel als Pulver vor, kann es in im Stand der Technik bekannte Pasten eingearbeitet werden. Als pulverförmiges Leuchtmittel kann beispielsweise mit Kupfer dotiertes Zinksulfid, welches von der Firma Xtra Dynamics, Heilbronn (Deutschland), unter dem Namen ZINC SULFIDE 2 COPPER ACTIVATED vertrieben wird, eingesetzt werden.

Bei der transparenten Frontelektrode handelt es sich um eine lichtdurchlässige Elektrode. Diese kann erfindungsgemäß zusätzlich eine Leiterbahn aufweisen, um einen Anschluss an einen Wechselstromgenerator zu erleichtern. Als Wechselstromgenerator (Inverter) kann beispielsweise ein Inverter der "FOLNET"-Serie der Firma LIGHTEC GmbH, Litzendorf (Deutschland), eingesetzt werden.

Die Frontelektrode umfasst in einer bevorzugten Ausführungsform wenigstens ein leitfähiges organisches Polymer. Leitfähige Polymere, wie beispielsweise Polyacetylen, Poly(para-phenylen), Polyphenylenvinylen, Polythiophen, Polyethylendioxythiophen, Polyanilin oder Polypyrol sind im Stand der Technik bekannt. Bevorzugt umfasst die transparente Frontelektrode Polyethylendioxythiophen (PEDOT, Poly-3,4-ethylendioxythiophen) und/oder Polystyrolsulfonat (PSS), besonders bevorzugt umfasst sie PEDOT und PSS. Eine geeignete Frontelektrode umfasst daher Clevios® S V3 der Firma Heraeus, Hanau (Deutschland). Insbesondere besteht die Frontelektrode daraus. Bei Clevios® S V3 handelt es sich um eine auf PEDOT/PSS basierenden Zusammensetzung. Diese Polymere weisen eine gute Leitfähigkeit auf und lassen sich leicht verarbeiten. Somit wird eine homogene Spannung, welche an die elektrolumineszente Schicht angelegt wird, sichergestellt.

Die erfindungsgemäße Tapete umfasst weiterhin eine Musterschicht, welche die elektrolumineszente Schicht oder die gegebenenfalls vorhandene zweite Schutzschicht wenigstens teilweise bedeckt. Musterschicht im Sinne der vorliegenden Erfindung bezeichnet eine Schicht, in welcher wenigstens ein Muster in üblicher Verfahrensweise auf eine Tapete aufgebracht wird. Dabei kann das aufgedruckte Muster, also die Musterschicht, sich flächig auf der elektrolumineszenten Schicht, gegebenenfalls getrennt durch die zweite Schutzschicht, befinden. Es ist jedoch erfindungsgemäß auch möglich, dass die elektrolumineszente Schicht die Musterschicht umrandet, oder die Musterschicht die elektrolumineszente Schicht nur teilweise bedeckt, auch hier jeweils gegebenenfalls getrennt durch die zweite Schutzschicht.

Die elektrolumineszente Tapete ermöglicht somit die Darstellung elektrolumineszenter Muster. Gedruckte Muster der Musterschicht können durch die Elektrolumineszenz betont werden oder es können einzelne Bereiche einer Tapete hervorgehoben werden. Durch die Musterschicht werden unterschiedlichste graphische Gestaltungsmöglichkeiten, wie sie auch bei herkömmlichen Tapeten möglich sind, sichergestellt. Durch die elektrolumineszente Schicht wird die Gestaltungsmöglichkeit erweitert.

Die Schichtdicken der einzelnen Schichten der elektrolumineszenten Schicht liegen vorzugsweise jeweils zwischen 0,1 mm und 1,0 mm. Die Schichtdicke der elektrolumineszenten Schicht liegt vorzugsweise im Bereich von 0,8 bis 1,8 mm. Die Schichtdicke der Musterschicht beträgt vorzugsweise 0,8 bis 1,5 mm. Mit diesen Schichtdicken wird einerseits eine homogene Elektrolumineszens der Tapete in den entsprechend bedruckten Bereichen sichergestellt. Auf der anderen Seite ist eine flexible Verarbeitung und Lagerung der Tapete möglich.

Die erfindungsgemäße Tapete kann durch ein Verfahren hergestellt werden, welches die folgenden Schritte umfasst:
a) Bereitstellen des Substrats,
b) gegebenenfalls Aufbringen einer ersten Schutzschicht auf das Substrat derart, dass die Schutzschicht das Substrat vollständig bedeckt,
c) Aufbringen einer Rückseitenelektrode auf das Substrat oder die erste Schutzschicht, wodurch das Substrat/die erste Schutzschicht wenigstens teilweise durch die Rückseitenelektrode bedeckt ist,
d) Aufbringen einer dielektrischen Schicht auf die Rückseitenelektrode,
e) Aufbringen einer Leuchtschicht auf die dielektrische Schicht,
f) Aufbringen einer transparenten Frontelektrode auf die Leuchtschicht,
g) gegebenenfalls Aufbringen einer zweiten transparenten Schutzschicht zum vollständigen Abdecken der Leuchtschicht und der ersten Schutzschicht, soweit diese nicht durch die Rückseitenelektrode, die dielektrische Schicht oder die Leuchtschicht bedeckt ist,
h) Aufbringen einer Musterschicht auf das Substrat und/oder die transparente Frontelektrode oder die optional vorhandene zweite transparente Schutzschicht, und
i) Trocknen der Tapete.

Bei den Materialien der einzelnen Schichten handelt es sich um fließfähige Stoffe oder Stoffgemische mit unterschiedlicher Viskosität. Vor dem Aufbringen der jeweiligen Schutzschichten wird das jeweilige Material der Schichten daher vorzugsweise mit einem Handspachtel oder einem elektrischen Rührer aufgerührt. Dies stellt sicher, dass die enthaltenden funktionellen Materialien in der jeweiligen Schicht gleichmäßig verteilt sind, wodurch eine homogene Elektrolumineszenz sichergestellt wird.

Das Material zum Aufbringen der Rückseitenelektrode kann beispielsweise in Form einer Paste vorliegen. Diese weist idealerweise einen Widerstand von 0,00 Ω auf. Erfindungsgemäß ist es möglich diese Paste mit einer im Tapetendruck üblichen Paste auf Wasserbasis zu verdünnen. Erfindungsgemäß kann die pastöse Rückseitenelektrode in einem Gewichtsverhältnis von 1 : 1 bis 3 : 1 verdünnt werden. Der Widerstand der so erhaltenen Rückseitenelektrode beträgt bis zu 0,01 beziehungsweise 0,02 Ω. Bei einer weiteren Verdünnung, beispielsweise von 3 : 1 (Standard-Paste: Rückseitenelektrode) beträgt der Widerstand 0,1 Ω. Hier kann eine ausreichende Elektrolumineszenz nicht mehr gewährleistet werden. Weiterhin ist es auch möglich das Material der Vorderseitenelektrode mit einer anderen Farbe zu überdrucken. Dadurch können weitere Farbeffekte auf der Tapete erzielt werden.

Auch die Leuchtschicht liegt vorzugsweise vor dem Aufbringen in Form einer Paste vor. Hierbei kann es sich um eine kommerziell erhältliche Paste, welche beispielsweise ein Metall-dotiertes Zinksulfid als Leuchtmittel enthält, handeln. Bevorzugt liegt das Leuchtmittel jedoch als Pulver vor. Ein entsprechendes Pulver kann in Pasten, welche bei der Herstellung konventioneller Tapeten bekannt ist, eingearbeitet werden. Dies ermöglicht eine leichte Verarbeitung der Leuchtschicht mit in diesem technischen Gebiet bekannten Verfahren. Die Leuchtschicht kann erfindungsgemäß weiterhin ein oder mehrere Additiv(e), ausgewählt aus Weichmachern, Stabilisatoren, Stabilisatoren mit Treibmitteln und Isoparaffin, enthalten.

Durch die Auswahl des Anteils an Pulver, welches in eine Paste eingerührt wird, kann zudem die Intensität der Elektrolumineszenz eingestellt werden. Das Gewichtsverhältnis von Pulver der Leuchtschicht zur Paste liegt daher insbesondere im Bereich von 1 : 1 bis 3 : 1. Liegt das Gewichtsverhältnis bei weniger als 1 : 1, so ist die Leuchtkraft, insbesondere bei Mustern, gering. Wird die elektrolumineszente Schicht vollflächig auf die erste Schutzschicht aufgetragen, so ist es möglich, dass eine geringe Leuchtintensität gewünscht ist. In einem solchen Fall kann das Gewichtsverhältnis von dem Pulver der Leuchtschicht zur Paste auch weniger als 1 : 1, beispielsweise 1 : 2 oder 1 : 3 betragen.

Bei einem Gewichtsverhältnis von 3 : 1 ist die Leuchtintensität bzw. die Leuchtkraft sehr gut. Die Verwendung einer reinen Paste, welche das Material der Leuchtschicht aufweist, wird nicht verbessert. Lediglich die Kosten für die Leuchtschicht werden hierdurch erhöht. Eine sehr gute Leuchtkraft erhält man beim Gewichtsverhältnis von 2 : 1. Hier ist auch bei einem nur teilweisen Aufbringen der elektrolumineszenten Schicht auf die erste Schutzschicht eine ausreichende Leuchtkraft sichergestellt, wodurch auch Muster und Strukturen, welche durch die elektrolumineszente Schicht dargestellt werden können, deutlich leuchtend hervortreten.

Vorzugsweise wird das Substrat vor dem Aufbringen der Schichten in einer geeigneten Haltevorrichtung in einer bestimmten Position gehalten, und dadurch mit Hilfe von Anlegemarken, welche dem Fachmann bekannt sind, in eine gewünschte Richtung ausgerichtet. Insbesondere erfolgt dies mittels einer Vakuumansaugung. Ein entsprechend fixiertes Substrat kann innerhalb der Haltevorrichtung nicht verrutschen. Dies ermöglicht ein passgenaues Drucken, bei welchem die einzelnen Schichten in ihrer Position abgestimmt sind. Durch ein Verrutschen des Substrats können insbesondere die dielektrische Schicht und die Leuchtschicht nicht passgenau aufgebracht werden. Hierdurch könnte es zu einem Kurzschluss zwischen der Frontelektrode und der Rückseitenelektrode kommen, wodurch eine Elektrolumineszenz der Tapete nicht mehr sichergestellt wäre.

Die Rückseitenelektrode umfasst die Anschlüsse sowohl für die Rückseitenelektrode als auch für die Frontelektrode. Die Frontelektrode wird daher so aufgebracht, dass sie beide Anschlüsse (Leiter) der Rückseitenelektrode vollständig bedeckt.

Nach dem Aufbringen aller Schichten wird die Tapete getrocknet, so dass alle Schichten vollständig trocken sind. Die Trocknung erfolgt insbesondere bei einer Temperatur im Bereich von 180 °C bis 250 °C, insbesondere von 200 °C bis 210 °C für eine Dauer von 20 bis 60 Sekunden, insbesondere von 30 bis 40 Sekunden. Bei der Trocknung werden alle Schichten, welche auf das Trägermaterial aufgebracht werden, vollständig getrocknet. Eventuell noch vorhandene Lösungsmittel werden vollständig entfernt. Nach dem Trocknen kühlt die Tapete auf Raumtemperatur ab und kann dann für den Verkauf vorbereitet, beispielsweise in die gewünschte Größe gebracht und verpackt werden.

Die Trocknung als auch die im Folgenden beschrieben Erwärmung können beispielsweise in einem Heißluftofen oder in einem Feld mit Infrarot- Licht (IR-Feld) getrocknet werden, wobei vorzugsweise sowohl während dem Trocknen im Heißluftofen als auch im IR-Feld ein Absaugung der Abluft erfolgt. Lösungsmittel, die während dem Trocknen/Erwärmen entfernt werden, gelangen so nicht in die Umgebungsluft. Das Arbeiten bei einer inerten Atmosphäre ist nicht notwendig.

In einer bevorzugten Ausführungsform umfasst das erfindungsgemäße Verfahren weiterhin, dass nach jedem Aufbringen einer Schicht in den Schritten b) bis g), die jeweilige Schicht auf eine Temperatur im Bereich von 130 °C bis 190 °C erwärmt wird. Ein erfindungsgemäßes Verfahren würde somit in Schritt b) nicht nur das Aufbringen der ersten Schutzschicht, sondern auch das Erwärmen der Schutzschicht umfassen, bevor die Rückseitenelektrode aufgebracht wird. In der bevorzugten Ausführungsform wird dann auch diese erwärmt, bevor die dielektrische Schicht in Schritt d) aufgebracht wird. Auch die dielektrische Schicht wird erwärmt, bevor die Leuchtschicht aufgebracht wird. Auf die Leuchtschicht wird dann die transparente Frontelektrode aufgebracht. Nach dem Erwärmen der Frontelektrode erfolgt das Aufbringen und anschließende Erwärmen der zweiten Schutzschicht. Auf diese wird dann die Musterschicht aufgebracht und anschließend die gesamte Tapete insbesondere bei einer Temperatur im Bereich von 180 °C bis 250 °C, insbesondere von 200 °C bis 210 °C für eine Dauer von 20 bis 60 Sekunden, insbesondere von 30 bis 40 Sekunden vollständig getrocknet.

Durch das Erwärmen einer erfindungsgemäßen Tapete wird sichergestellt, dass die Schichten nicht fließend ineinander übergehen. Da die Erwärmung bei einer Temperatur im Bereich von 130 °C bis 190 °C, insbesondere bei 160 °C erfolgt, wird eine ausreichende Haftung zwischen den Schichten sichergestellt. Auch hierdurch werden eine konstante Haftung und damit ein dauerhaftes Leuchten der Tapete während der gesamten Lebensdauer ermöglicht. Das Erwärmen führt zu einem Gelieren der Zusammensetzung und ermöglicht so, dass die einzelnen Schichten trocken sind, bevor eine nächste Schicht aufgebracht wird, so dass ein trocken-trocken Druckverfahren ermöglicht wird.

Bei dem erfindungsgemäßen Verfahren erfolgt das Aufbringen der Schichten vorzugsweise mittels Siebdruck. Durch das Siebdruckverfahren können höhere Schichtdicken der einzelnen Schichten ermöglicht werden, als im sonst im Herstellungsverfahren für Tapeten üblichen Tiefdruckverfahren.

Bei der Auswahl der Gewebearten für die Flachsiebe im Siebdruckverfahren ist auf die Viskosität der aufzubringenden Schichten abzustellen. Die Rückseitenelektrode, die dielektrische Schicht und die Leuchtschicht bzw. die Materialien, welche zur Herstellung der Schicht aufgebracht werden, weisen üblicherweise eine Viskosität von etwa 1800 mPas auf. Es handelt sich hierbei also um hochviskose Pasten. Diese werden insbesondere mit einem 60iger Gewebe, welches also 60 Fäden je cm aufweist, auf das Substrat aufgebracht. Die Frontelektrode weist vor dem Aufbringen üblicherweise eine Viskosität im Bereich von 1000 mPas. Es handelt sich also um eine niederviskose Paste. Hier kann ein 125iger Gewebe für das Flachsieb ausgewählt werden. Die Viskositäten der einzelnen Materialien wurden bei einer Temperatur von 24,8 °C bei einer Scherrate von 7,27 s⁻¹ mit einem Viskosimeter Viscolab LC20 der Firma Physica gemessen. Die Viskosität der Materialien der Leuchtschicht und der dielektrischen Schicht liegen vorzugsweise im Bereich von 1000 mPas bis 1800 mPas. Das Material der Rückseitenelektrode weist vor dem Aufbringen vorzugsweise eine Viskosität im Bereich von 2200 mPas bis 3000 mPas auf. Innerhalb dieser Bereiche ist eine gute Verarbeitbarkeit möglich.

Die Materialien der jeweiligen Schichten werden dann durch das jeweilige Sieb aufgebracht. Das Aufbringen umfasst alle im Stand der Technik bekannten Aufbringmöglichkeiten, wie beispielsweise Streichen oder Rakeln. Insbesondere beim Rakeln ist darauf zu achten, dass die Schicht vollständig in einem Schritt aufgebracht wird. Wird nur einmal gerakelt, so erhält man eine besonders homogene Schicht, welche das endgültige Erscheinungsbild der elektrolumineszenten Tapete verbessert. Zudem wird ein homogenes Leuchten aller Elemente auf der Tapete sichergestellt. Sollen höhere Schichtdicken zur Erzielung dreidimensionaler Effekte erhalten werden, können die einzelnen Schichten durch mehrmaliges Rakeln aufgetragen werden. Durch eine größere Schichtdicke insbesondere der Leuchtschicht und der dielektrischen Schicht wird die elektrolumineszente Funktionsfähigkeit verbessert.

Erfindungsgemäß ist es auch möglich, dass nicht über die vollständige Fläche der Tapete die gleiche Leuchtschicht und/oder das gleiche Dielektrikum eingesetzt werden. Durch unterschiedliche Leuchtschichten kann beispielsweise die Lichtintensität in unterschiedlichen Bereichen der Tapete entsprechend eingestellt werden. Hier ist insbesondere darauf zu achten, dass eine homogene Verteilung der Materialien vorherrscht, um sicherzustellen, dass die Leuchtschicht durch Anlegen einer Spannung homogen leuchtet.

Bei der erfindungsgemäßen Tapete entspricht die Farbe der emittierten Lichts der Frequenz des Wechselstroms. Durch Einstellen des Wechselstroms ist es damit auch möglich die Lichtemission in ihrer Farbe, also in ihrer Wellenlänge einzustellen.

Nachfolgend wird eine erfindungsgemäße Tapete mit ihren Grunddaten illustriert:
transparente erste PVC-Schutzschicht:
   Schichtdicke: 0,05 - 0,06 mm
Rückenelektrode:
   Schichtdicke: 0,03 - 0,04 mm / Bestandteile: 60 Gew.% Follmann "Aqua Screen", 30 Gew.% Eckart Effect Pigments "eConduct 12 20 00", 10 Gew.% Wasser
Dielektrikum:
   Schichtdicke: 0,03 - 0,04 mm
Leuchtschicht:
   Schichtdicke: 0,05 mm / Bestandteile: 52,5 Gew. % Leuchtpulver, 42,5 Gew.% Follmann "Aqua Screen", 5 Gew.% Wasser
Frontelektrode:
   Schichtdicke: 0,01 mm
Musterschicht:
   wie oben im Text definiert
zweite transparente PVC-Schutzschicht:
   Schichtdicke: 0,05 - 0,06 mm

## Patentansprüche

1. Elektrolumineszente Tapete, umfassend:
• ein Substrat mit einer ersten Schutzschicht,
• eine elektrolumineszente Schicht, welche die erste Schutzschicht wenigstens teilweise bedeckt, und
• eine Musterschicht, welche die elektrolumineszente Schicht wenigstens teilweise bedeckt,
wobei
die elektrolumineszente Schicht eine Rückseitenelektrode, eine dielektrische Schicht, eine Leuchtschicht und eine transparente Frontelektrode umfasst,
die Rückseitenelektrode die erste Schutzschicht wenigstens teilweise bedeckt und eine zweite Schutzschicht die transparente Frontelektrode vollständig bedeckt, und
die dielektrische Schicht Titandioxid, ein Netzmittel, Paraffin und ein Bindemittel umfasst.

2. Tapete nach Anspruch 1, **dadurch gekennzeichnet, dass** das Bindemittel ein Emulsions-PVC und ein Extender-PVC enthält.

3. Tapete nach Anspruch 1 oder 2, **dadurch gekennzeichnet, dass** die dielektrische Schicht folgendes umfasst:
45 bis 65 Gew.-% Titandioxid,
0,5 bis 5 Gew.-% Netzmittel,
20 bis 35 Gew.-% Bindemittel,
0,1 bis 5 Gew.-% Paraffin,
0,1 bis 5 Gew.-% Weichmacher und
0,1 bis 3 Gew.-% Stabilisator,
wobei das gesamte dielektrische Material 100 Gew.-% entspricht.

4. Tapete nach einem der Ansprüche 1 bis 3, **dadurch gekennzeichnet, dass** die dielektrische Schicht
45 bis 55 Gew.-% Rutil-Titandioxid
15 bis 25 Gew.-% Emulsions-PVC
15 bis 25 Gew.-% Weichmacher
4 bis 8 Gew.-% Extender-PVC
0,5 bis 3 Gew.-% Netzmittel
0,5 bis 1 Gew.-% Isoparaffin und
0,3 bis 1 Gew.-% Stabilisator mit Treibmittel
umfasst, wobei das gesamte dielektrische Material 100 Gew.-% entspricht.

5. Tapete nach einem der Ansprüche 1 bis 4, **dadurch gekennzeichnet, dass** sie weiterhin elektrische Anschlüsse für die Rückseiten- und die Frontelektrode an einer Seite der Tapete aufweist.

6. Tapete nach einem der Ansprüche 1 bis 5, **dadurch gekennzeichnet, dass** sich die erste Schutzschicht auf dem Substrat befindet und dieses vollständig bedeckt und die zweite Schutzschicht die elektrolumineszente Schicht vollständig und die erste Schutzschicht insoweit diese nicht von der elektrolumineszenten Schicht bedeckt wird, bedeckt.

7. Tapete nach einem der Ansprüche 1 bis 6, **dadurch gekennzeichnet, dass** die Leuchtschicht Zinksulfid, insbesondere mit einem Metall dotiertes Zinksulfid, besonders bevorzugt mit Kupfer dotiertes Zinksulfid umfasst.

8. Tapete nach einem der Ansprüche 1 bis 7, **dadurch gekennzeichnet, dass** die transparente Frontelektrode ein leitfähiges Polymer, insbesondere PEDOT und/oder PSS umfasst.

## Claims

1. An electroluminescent wallpaper, comprising:
• a substrate with a first protective layer,
• an electroluminescent layer that covers said first protective layer at least in part, and
• a pattern layer that covers said electroluminescent layer at least in part,
wherein
said electroluminescent layer comprises a backside electrode, a dielectric layer, a luminous layer, and a transparent front electrode,
said backside electrode covers said first protective layer at least in part, and a second protective layer covers said transparent front electrode completely, and
said dielectric layer comprises titanium dioxide, a wetting agent, paraffin, and a binder.

2. The wallpaper according to claim 1, **characterized in that** said binder contains an emulsion PVC and an extender PVC.

3. The wallpaper according to claim 1 or 2, **characterized in that** said dielectric layer comprises:
from 45 to 65% by weight titanium dioxide,
from 0.5 to 5% by weight wetting agent,
from 20 to 35% by weight binder,
from 0.1 to 5% by weight paraffin,
from 0.1 to 5% by weight plasticizer, and
from 0.1 to 3% by weight stabilizer,
wherein the whole dielectric material amounts to 100% by weight.

4. The wallpaper according to any of claims 1 to 3, **characterized in that** said dielectric layer comprises:
from 45 to 55% by weight rutile titanium dioxide,
from 15 to 25% by weight emulsion PVC,
from 15 to 25% by weight plasticizer,
from 4 to 8% by weight extender PVC,
from 0.5 to 3% by weight wetting agent,
from 0.5 to 1% by weight isoparaffin, and
from 0.3 to 1% by weight stabilizer with blowing agent,
wherein the whole dielectric material amounts to 100% by weight.

5. The wallpaper according to any of claims 1 to 4, **characterized by** further comprising electric connections for the backside and front electrodes on one side of the wallpaper.

6. The wallpaper according to any of claims 1 to 5, **characterized in that** said first protective layer is present on the substrate and covers it completely, and said second protective layer covers said electroluminescent layer completely, and covers said first protective layer where it is not covered by said electroluminescent layer.

7. The wallpaper according to any of claims 1 to 6, **characterized in that** said luminous layer comprises zinc sulfide, specially zinc sulfide doped with a metal, more preferably zinc sulfide doped with copper.

8. The wallpaper according to any of claims 1 to 7, **characterized in that** said transparent front electrode comprises a conductive polymer, especially PEDOT and/or PSS.

## Revendications

1. Papier peint électroluminescent, comprenant :
• un substrat avec une première couche protectrice,
• une couche électroluminescente qui couvre ladite première couche protectrice au moins partiellement, et
• une couche de motif qui couvre ladite couche électroluminescente au moins partiellement,
dans lequel
ladite couche électroluminescente comprend une électrode arrière, une couche diélectrique, une couche lumineuse, et une électrode frontale transparente,
ladite électrode arrière couvre ladite première couche protectrice au moins partiellement, et
une seconde couche protectrice couvre ladite électrode frontale transparente complètement, et
ladite couche diélectrique comprend du dioxyde de titane, un agent mouillant, de la paraffine, et un liant.

2. Papier peint selon la revendication 1, **caractérisé en ce que** ledit liant contient un PVC d'émulsion et un PVC d'extension.

3. Papier peint selon la revendication 1 ou 2, **caractérisé en ce que** ladite couche diélectrique comprend :
de 45 à 65 % en poids de dioxyde de titane,
de 0,5 à 5 % en poids d'agent mouillant,
de 20 à 35 % en poids de liant,
de 0,1 à 5 % en poids de paraffine,
de 0,1 à 5 % en poids de plastifiant, et
de 0,1 à 3 % en poids de stabilisateur,
dans lequel le matériau diélectrique total correspond à 100 % en poids.

4. Papier peint selon l'une quelconque des revendications 1 à 3, **caractérisé en ce que** ladite couche diélectrique comprend :
de 45 à 55 % en poids de dioxyde de titane rutile,
de 15 à 25 % en poids de PVD d'émulsion,
de 15 à 25 % en poids de plastifiant,
de 4 à 8 % en poids de PVD d'extension,
de 0,5 à 3 % en poids d'agent mouillant,
de 0,5 à 1 % en poids d'isoparaffine, et
de 0,3 à 1 % en poids de stabilisateur avec agent d'expansion,
dans lequel le matériau diélectrique total correspond à 100 % en poids.

5. Papier peint selon l'une quelconque des revendications 1 à 4, **caractérisé en ce qu'**il comprend en outre des connexions électriques pour les électrodes arrière et frontale sur un côté du papier peint.

6. Papier peint selon l'une quelconque des revendications 1 à 5, **caractérisé en ce que** ladite première couche protectrice est présente sur le substrat et le couvre complètement, et la seconde couche protectrice couvre la couche électroluminescente complètement, et couvre la première couche protectrice partout où elle n'est pas couverte par la couche électroluminescente.

7. Papier peint selon l'une quelconque des revendications 1 à 6, **caractérisé en ce que** ladite couche lumineuse comprend du sulfure de zinc, notamment du sulfure de zinc dopé avec un métal, de préférence du sulfure de zinc dopé avec du cuivre.

8. Papier peint selon l'une quelconque des revendications 1 à 7, **caractérisé en ce que** ladite électrode frontale transparente comprend un polymère conducteur, notamment du PEDOT et/ou du PSS.
